# EUROPEAN PATENT SPECIFICATION

(11) **EP 3 680 522 B1**
(45) Date of publication and mention of the grant of the patent: **12.06.2024**
(21) Application number: 20151499.9
(22) Date of filing: 13.01.2020
(51) Int. Cl.: F16K 1/24, F16K 5/04, F16K 5/18, F16K 11/085, F16K 27/02, F16K 27/06, F16K 39/04, F01P 7/14, F16K 5/06, F16K 5/20, F16K 11/087

(54) **VALVE**
VENTIL
VANNE

(30) Priority: 14.01.2019 CN 201910033577; 08.01.2020 CN 202010017999
(43) Date of publication of application: 15.07.2020
(73) Proprietor: Illinois Tool Works, Inc., Glenview, Illinois 60025 (US)
(72) Inventor: Henker, Michael, Glenview, Illinois 60025 (US); Ma, Yue, Glenview, Illinois 60025 (US)
(74) Representative: HGF

(56) References cited:
- EP-A1- 0 398 406
- BE-A- 535 179
- DE-C- 350 071
- GB-A- 2 537 134
- JP-A- 2005 003 022
- US-B1- 6 196 520
- US-B1- 6 340 029
- US-B2- 9 228 664

## Description

### TECHNICAL FIELD

The present disclosure relates to a multi-passage valve, and in particular to a multi-passage valve for temperature regulation inside a vehicle.

### BACKGROUND

A multi-passage valve is used in a temperature regulation system inside a vehicle. The multi-passage valve controls flow paths of the coolant through connecting different fluid passages inside the vehicle, thereby regulating the temperature of various components inside the vehicle. The multi-passage valve generally comprises a housing and a hollow valve body disposed inside the housing, and the housing is provided with housing openings, each of which is connected to the temperature regulating system inside the vehicle through a pipeline. Corresponding to the housing openings, the valve body is provided with valve body acting portions. The valve body acting portions may be valve body opening portions or valve body blocking portions for communicating or blocking the housing openings on the housing. The valve body can be driven by an actuator to rotate to enable the valve body acting portions to align with the housing openings, so as to communicate or block different openings of the housing, thereby forming different temperature regulation paths in the temperature regulating system. Here, multiple sealing elements are provided between the valve body and the housing openings so as to ensure that the passages that are either connected or disconnected can have leakproofness. When the valve body rotates, the sealing elements abut against an inner wall of the housing or an outer wall of the valve body and apply a pressing force thereto, the sealing elements hinder rotation of the valve body due to the frictional resistance caused by elastic deformation thereof, and the frictional resistance shall be overcome to enable the valve body to be driven to rotate. When there are more temperature regulation passages, more sealing elements are required to ensure leakproofness of respective passages, and the frictional force of the sealing elements that hinders rotation of the valve body is also greater.

The existing actuators are usually small electric motors with limited output power, so when the frictional resistance is too large, a more powerful electric motor or a number of actuators (driving device) are required.

US9228664 discusses a rotary multi-port valve having a valve body having a primary flow port and a plurality of secondary flow ports. US6196520 discusses an air distribution device with a shutter of the drum type, in particular for a motor vehicle. GB2537134 discusses a valve closure device having a closure member, which may be domed, and one or more shafts, each connected to a pivot which is surrounded by two eccentric bushes. US6340029 discusses an apparatus for opening/closing a valve in which a position of a seat for maintaining an airtightness of a valve member is varied before or after an opening/closing operation of the valve member, wherein the valve member is rotated in a fluid passage of a valve body in order to open/close a valve.

### SUMMARY OF THE DISCLOSURE

One object of the present disclosure is to provide a valve, which can reduce the frictional resistance of a sealing element against a valve body or a housing so as to implement the control and switching for more groups of temperature regulation passages in the case that the output power of the actuator is limited. The specific technical solution is as follows:
The invention is directed to a multi-passage valve as defined by the features of claim 1. Further aspects of the valve are detailed in the dependent claim.

### BRIEF DESCRIPTION OF THE DRAWINGS

Fig. 1A is a structural schematic diagram of an axial section of a valve 100 according to one embodiment of the present disclosure;
Figs. 1B-(a) and 1B-(b), Figs. 1C-(a) and 1C-(b) and Figs. 1D-(a) and 1D-(b) are three types of sectional schematic diagrams of the valve 100 in Fig. 1A along line A-A, showing three embodiments of the radial arrangement of sealing elements in the valve 100;
Figs. 2A and 2B are simplified schematic views of the sealing element 116;

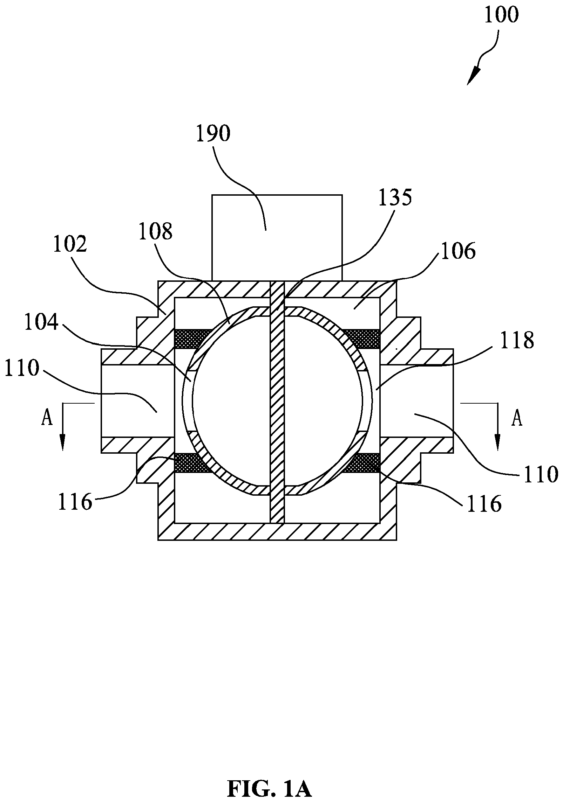

Figs. 3A-(a), 3A-(b) and 3A-(c), and Figs. 3B-(a), 3B-(b) and 3B-(c) are simplified schematic diagrams of a housing, a valve body and the sealing element according to one unclaimed embodiment of the valve 100 in Fig. 1A;
Figs. 4A-(a), 4A-(b), 4A-(c), 4B-(a), 4B-(b) and 4B-(c) are simplified schematic views of the housing, the valve body and the sealing element according to another unclaimed embodiment of the valve 100 in Fig. 1A;

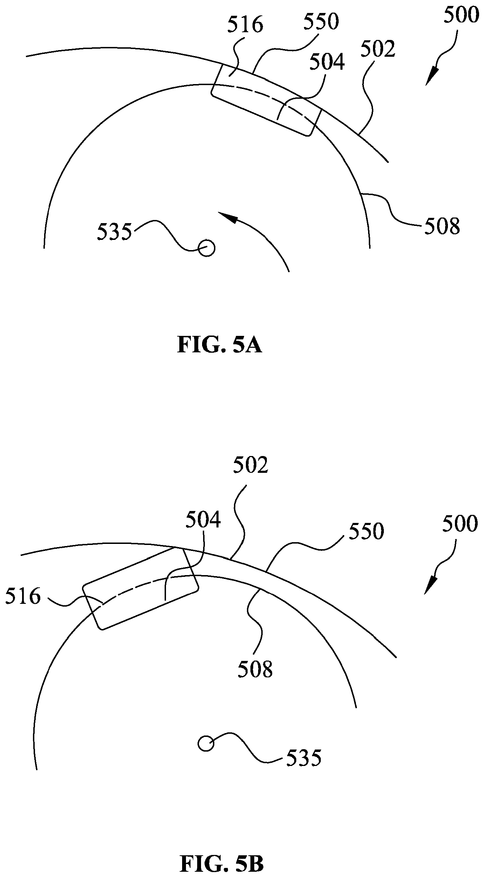

Figs. 5A and 5B are simplified principle schematic diagram of the valve having a lifting structure 550 according to still another embodiment of the present disclosure; and

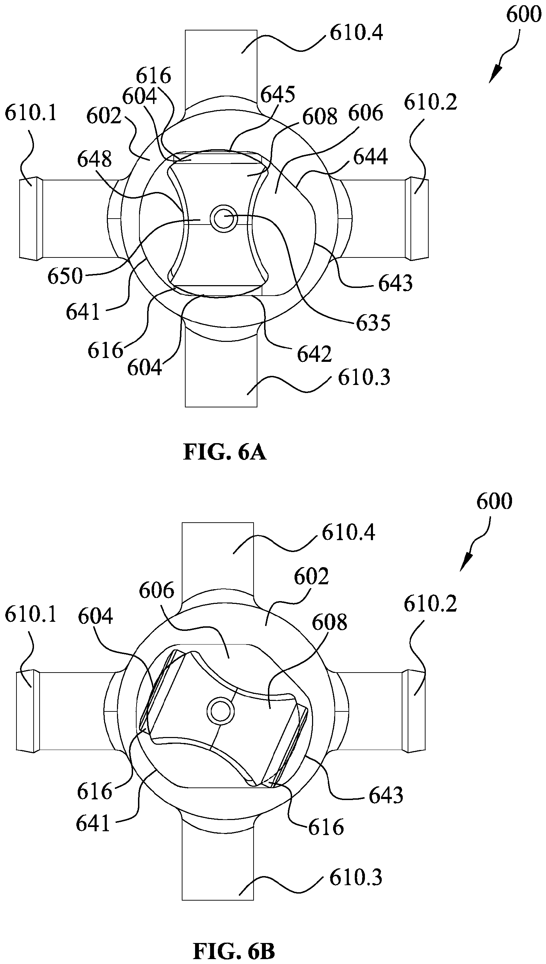

Figs. 6A and 6B are specific structural views of the valve 600 having a lifting structure 650 according to yet another unclaimed embodiment of the present disclosure.

### DETAILED DESCRIPTION OF EMBODIMENTS

Particular embodiments of the present disclosure are described below with reference to the accompanying drawings which constitute part of this description. It is to be understood that although the terms indicating orientations, such as "front", "rear", "upper", "lower", "left", "right", "top" and "bottom", are used in the present disclosure to describe orientations of structural parts and elements in various examples of the present disclosure, these terms are used herein only for ease of illustration and are determined based on the exemplary orientations shown in the accompanying drawings. Since the embodiments disclosed in the present disclosure can be arranged in different directions, these terms indicating directions are only illustrative and should not be considered as limitations. If possible, the same or similar reference numerals used in the present disclosure refer to the same components.

Fig. 1A is a structural schematic diagram of an axial section of a valve 100. As shown in Fig. 1A, the valve 100 comprises a housing 102 of a substantially cylindrical shape and having a cavity 106 therein. An actuator 190, e.g. a motor, is provided at the top of the housing 102. The actuator 190 is connected to a driving shaft 135 extending into the cavity 106 and drives the driving shaft 135 to rotate. The outer wall of the housing 102 has a plurality of housing openings 110 configured to be connected to a temperature regulating system of a vehicle. By means of connecting different housing openings 110, the coolant can be controlled to flow through different flow paths for temperature regulation of components, such as a battery, a motor and a cabin of an electric vehicle inside the vehicle.

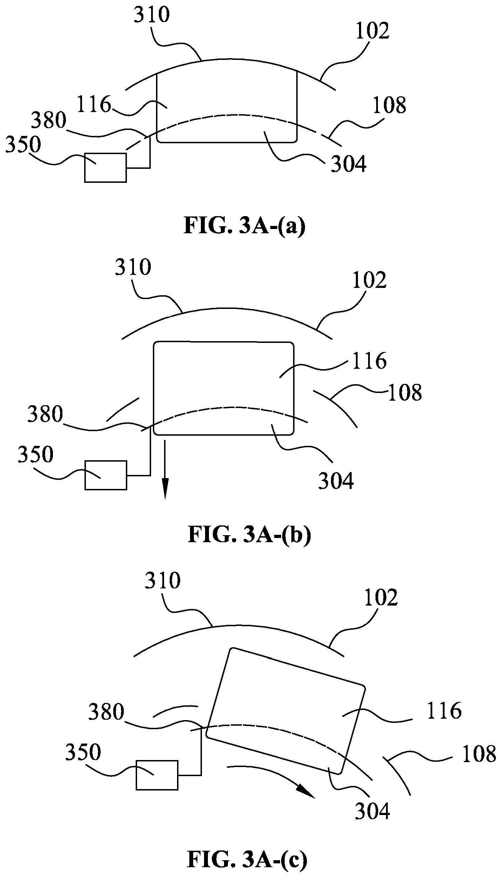

The valve 100 further comprises at least one valve body 108. The valve body 108 is disposed in the cavity 106 and is rotatable in the cavity 106. As an example, the driving shaft 135 passes through the valve body 108 and drives the valve body 108 to rotate in the cavity 106. The valve body 108 is provided with at least one valve body acting portion. In this embodiment, the valve body acting portions are valve body opening portions 104, and the remaining portion of the valve body 108 forms a valve body outer wall portion. When the valve body 108 rotates, the valve body opening portions 104 can align with the housing openings 110 to form a fluid passage 118. The valve 100 also comprises sealing elements 116 provided between the valve body 108 and the housing 102, and lifting structures for actuating the sealing elements 116 (referring to Figs. 3A, 3B, 4A, 4B, 5A, 5B, 6A and 6B for the structural principle of the lifting structures). When the valve body 108 rotates, the sealing elements 116 are actuated by the lifting structures to enable the sealing elements 116 to at least partially leave the valve body 108 or the housing 102, such that the valve body 108 can be less or not affected by frictional resistance during its rotation.

It is understood by those skilled in the art that, in some embodiments, other numbers of valve bodies 108 may be provided as needed, and the driving shaft 135 passes through each valve body in turn to drive them to rotate together. Here, each of the valve bodies 108 may be provided with other numbers of valve body opening portions 104. In some embodiments, the valve body 108 may not rotate to make the valve body opening portions 104 keep being connected with the housing openings 110. Different valve bodies and housings can be flexibly designed and assembled to meet different needs.

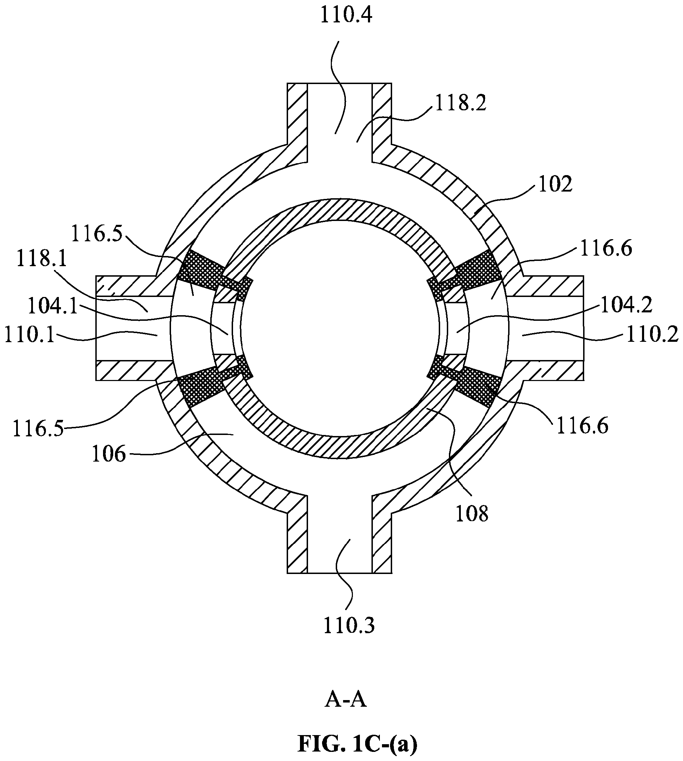

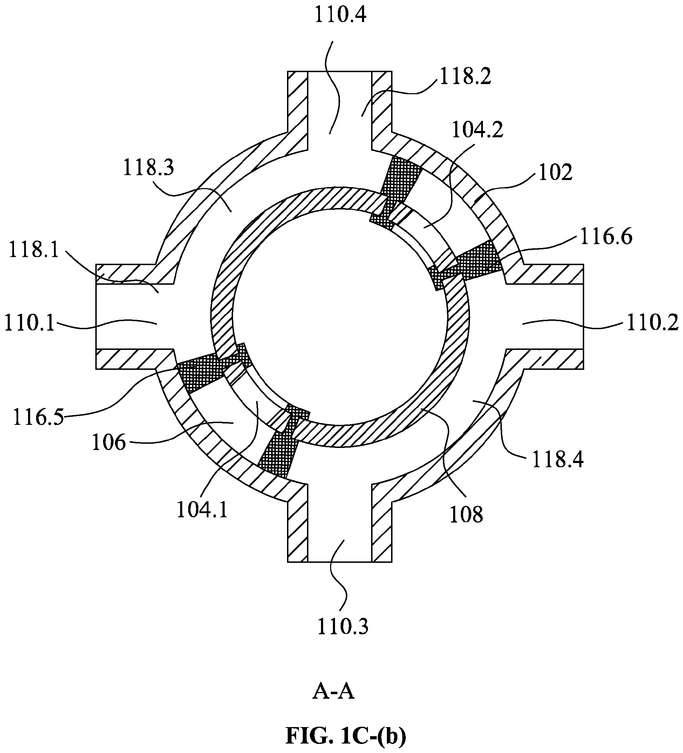

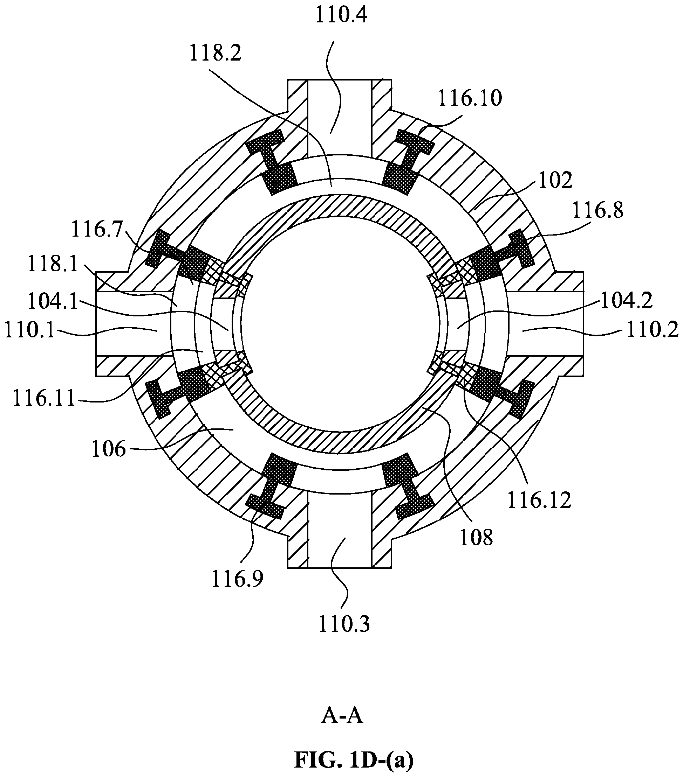

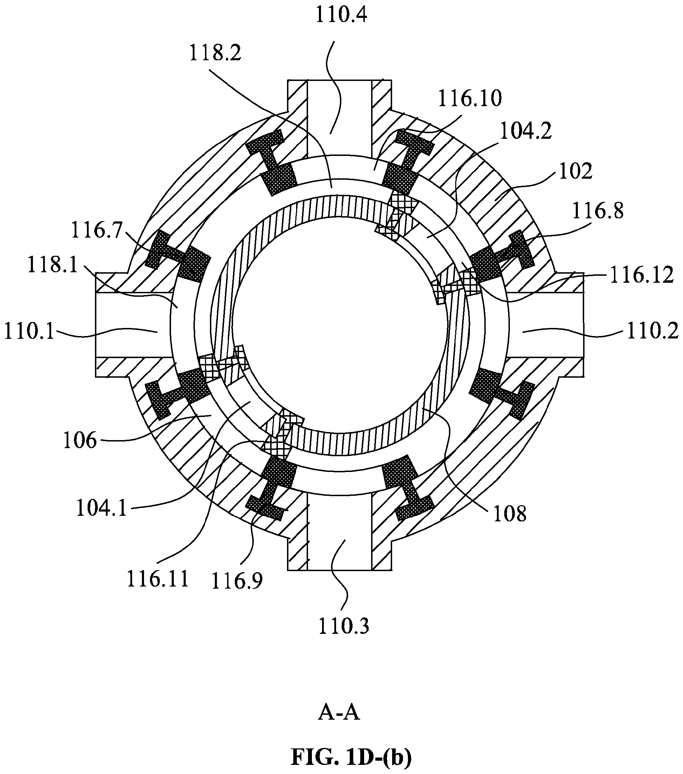

Figs. 1B-(a) and 1B-(b), Figs. 1C-(a) and 1C-(b), and Figs. 1D-(a) and 1D-(b) are three types of sectional views of the valve 100 in Fig. 1A along line A-A, showing three embodiments of the radial arrangement of the sealing elements in the valve 100, and showing operating positions of the valve body during its rotation according to the three embodiments.

The arrangement of the sealing element 116 according to the first embodiment and the rotational positions of the valve body 108 will now be described with reference to Figs. 1A, 1B-(a) and 1B-(b).

As shown in Figs. 1B-(a) and 1B-(b), the housing 102 is provided with four housing openings 110.1, 110.2, 110.3 and 110.4 spaced by 90°, wherein the housing openings 110.1 and 110.2 are oppositely arranged, and the housing openings 110.3 and 110.4 are oppositely arranged. The valve body 108 is of a hollow spherical shape and is provided with two oppositely arranged valve body opening portions 104.1 and 104.2 for selectively connecting two of the four housing openings so as to form a fluid passage 118.1 between the housing openings 110.1 and 110.2 and a fluid passage 118.2 between the housing openings 110.3 and 110.4.

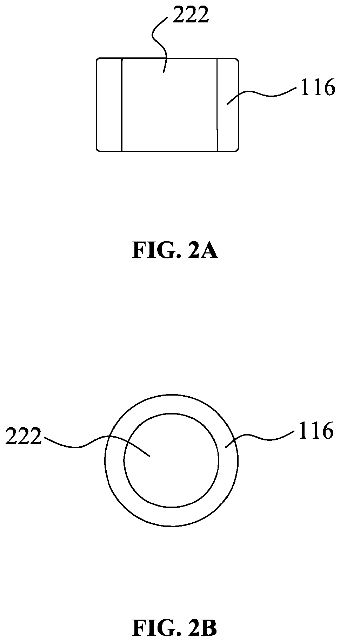

The sealing elements 116 comprises four sealing elements 116.1, 116.2, 116.3 and 116.4 arranged corresponding to the housing openings, and each sealing element is provided between the housing 102 and the valve body 108 around one corresponding housing opening. For example, the sealing element 116.1 is provided around the housing opening 110.1, the sealing element 116.2 is provided around the housing opening 110.2, the sealing element 116.3 is provided around the housing opening 110.3, and the sealing element 116.4 is provided around the housing opening 110.4. In this embodiment, the sealing element 116 is of a ring shape and has an opening 222 (referring to Fig. 2) in the center portion thereof, and the opening 222 can expose the housing opening 110 so that the sealing element 116 does not block the housing opening 110. The four sealing elements 116.1-116.4 are connected to the housing 102 on one side, and press the valve body 108 on the other side, thereby preventing fluid that flows in or out of the housing opening 110 from leaking through a space between the valve body 108 and the housing 102. Here, the sealing elements 116.1-116.4 can be elastically deformed such that frictional resistance is generated between the sealing elements 116.1-116.4 and the valve body 108, which frictional resistance shall be overcome to rotate the valve body 108. As an example, each sealing element 116 is formed by integral molding, for example by secondary injection molding or overmolding. Specifically, the housing 102 can be firstly formed by means of an injection molding process, and the sealing elements 116.1-116.4 are then formed on the housing 102 by means of a secondary injection molding process, so that the sealing elements 116.1-116.4 not only have a certain strength but also ensure the elasticity.

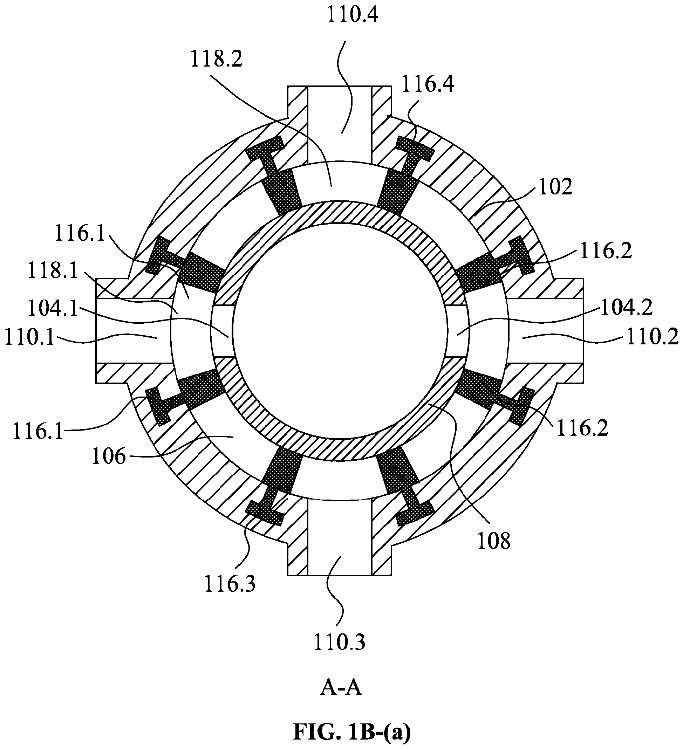

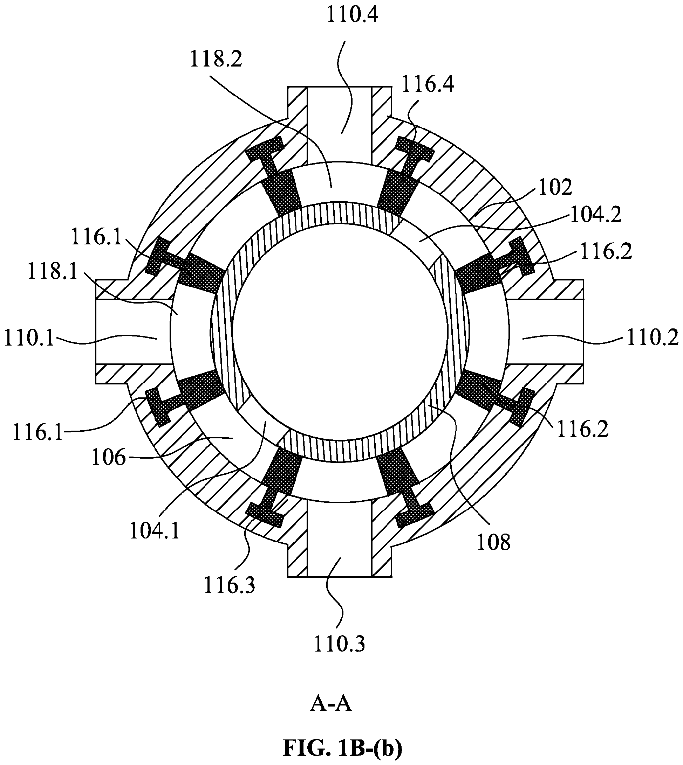

When the driving shaft 135 is driven by the actuator 190 to rotate to drive the valve body 108 to rotate by a predetermined angle to the position shown in Fig. 1B-(a), the valve body opening portions 104.1 and 104.2 respectively align with the housing openings 110.1 and 110.2 to connect the two housing openings, such that the fluid passage 118.1 between the housing openings 110.1 and 110.2 is connected. After flowing from the housing opening 110.1 into the fluid passage 118.1, the fluid can flow into the hollow cavity of the valve body 108 through the valve body opening portion 104.1 on the valve body 108, flow out of the valve body 108 from another valve body opening portion 104.2, and finally flow out from another housing opening 110.2 and vice versa. At the same time, the valve body outer wall portion aligns with the other housing openings 110.3 and 110.4 to disconnect the fluid passage 118.2 between the housing openings 110.3 and 110.4. At the moment, the sealing element 116.1 can prevent the housing opening 110.1 from being connected with the valve body opening portions 104 other than the corresponding valve body opening portion 104.1 or other housing openings 110 through the space between the valve body 108 and the housing 102. The function of the sealing element 116.2 is the same as that of the sealing element 116.1. The sealing element 116.3 is used to prevent the housing opening 110.3 from being connected with the valve body opening portions 104 or other housing openings through the space between the valve body 108 and the housing 102. The function of the sealing element 116.4 is the same as that of the sealing element 116.3. Thus, the fluid passage 118.1 can be connected in a sealed manner, and the fluid passage 118.2 can be disconnected in a sealed manner.

When the driving shaft 135 is driven by the actuator 190 to rotate to drive the valve body 108 to rotate counterclockwise by about 45° to reach the position shown in Fig. 1B-(b), the valve body opening portion 104.1 aligns with the housing 102 between the housing openings 110.1 and 110.3, and the valve body opening portion 104.2 aligns with the housing 102 between the housing openings 110.2 and 110.4, i.e., the valve body opening portions 104.1 and 104.2 do not align with any of the housing openings 110. At the same time, the housing openings 110.1, 110.2, 110.3 and 110.4 align with the valve body outer wall portion, so that the housing openings 110.1-110.4 are not connected with any of the valve body opening portions 104, and thus the fluid passage 118.1 and the fluid passage 118.2 are disconnected. At the moment, since the housing 102 does not move, neither the housing openings 110 nor the sealing elements 116 connected to the housing 102 are changed in position. The sealing elements 116.1-116.4 are used to prevent each housing opening 110.1-110.4 from being connected with the valve body opening portions 104 or other housing openings through the space between the valve body 108 and the housing 102. Thus, both the fluid passage 118.1 and the fluid passage 118.2 can be disconnected in a sealed manner.

Although not shown in detail in the figure, it is understood by those skilled in the art that when the actuator 190 is driven by the driving shaft 135 to rotate to drive the valve body 108 to rotate counterclockwise by about 90°, the valve body 108 is just offset by about 90° as compared to Fig. 1B-(a), and at the moment, the valve body opening portion 104.1 aligns with the housing opening 110.3, the valve body opening portion 104.2 aligns with the housing opening 110.4, the fluid passage 118.2 can be connected in a sealed manner, and the fluid passage 118.1 is disconnected in a sealed manner.

It should be noted that when the valve body 108 rotates by other angles so that the valve body opening portions 104 do not completely align with the housing openings 110, but rather are offset by a certain angle, the flow rate of the fluid flowing through the fluid passage 118 may also be regulated, i.e., the opening degree of the valve 100 is regulated.

The arrangement of the sealing element 116 according to the second embodiment and the rotational positions of the valve body 108 will now be described below with reference to Figs. 1A, 1C-(a) and 1C-(b).

As shown in Figs. 1C-(a) and 1C-(b), the structure of the housing 102 and the valve body 108 and the shape of the sealing elements are the same as those shown in the embodiment of Figs. 1B-(a) and 1B-(b). The difference lies in that in the present embodiment, the sealing elements 116 comprise two sealing elements 116.5 and 116.6 arranged corresponding to the valve body opening portions 104.1 and 104.2, and each sealing element is provided between the housing 102 and the valve body 108 around one corresponding valve body opening portion, for example, the sealing element 116.5 is provided around the valve body opening portion 104.1, and the sealing element 116.6 is provided around the valve body opening portion 104.2. In the present embodiment, the two sealing elements 116 are connected to the valve body 108 on one side, and press the inner wall of the housing 108 on the other side, thereby preventing the fluid flowing in or out of the housing openings 110 from leaking through a space between the valve body 108 and the housing 102. At the moment, the sealing elements 116.5 and 116.6 are also elastically deformed such that frictional resistance is generated between the sealing elements 116.5 and 116.6 and the housing 102, which frictional resistance shall be overcome to rotate the valve body 108. As an example, each sealing element 116 is formed by integral molding, for example by secondary injection molding or overmolding. Specifically, the valve body 108 can be firstly formed by means of an injection molding process, and the sealing elements 116.5 and 116.6 are then formed on the valve body 108 by means of a secondary injection molding process, so that the sealing elements 116.5 and 116.6 not only have a certain strength but also ensure the elasticity.

When the driving shaft 135 is driven by the actuator 190 to rotate to drive the valve body 108 to rotate by a predetermined angle to reach the position shown in Fig. 1C-(a), the position of the valve body 108 relative to the housing 102 is the same as that shown in Fig. 1B-(a). The valve body opening portions 104.1 and 104.2 respectively align with the housing openings 110.1 and 110.2, so that the fluid passage 118.1 is connected. At the same time, the valve body outer wall portion aligns with the other housing openings 110.3 and 110.4 to disconnect the fluid passage 118.2. At the moment, the sealing elements 116.5 and 116.6 can prevent the housing openings 110.1 and 110.2 from being connected with the valve body opening portions 104 other than the corresponding valve body opening portions or other housing openings 110 through the space between the valve body 108 and the housing 102 so that the fluid passage 118.1 is connected in a sealed manner. Unlike shown in Fig. 1B-(a), since no sealing element is provided at the housing openings 110.3 and 110.4, fluid can enter the space between the valve body 108 and the housing 102 through the housing opening 110.3 or 110.4. However, due to the sealing blockage of the sealing elements 116.5 and 116.6, even if the fluid enters the space between the valve body 108 and the housing 102, it cannot flow into the valve body opening portions 104 and the remaining housing openings, and the fluid passage 118.2 can still be disconnected in a sealed manner.

When the driving shaft 135 is driven by the actuator 190 to rotate to drive the valve body 108 to rotate counterclockwise by about 45° to reach the position shown in Fig. 1C-(b), the position of the valve body 108 relative to the housing 102 is also the same as that shown in Fig. 1B-(b). The valve body opening portions 104.1 and 104.2 do not align with any of the housing openings 110. As such, the fluid passage 118.1 between the housing openings 110.1 and 110.2 and the fluid passage 118.2 between the housing openings 110.3 and 110.4 are both disconnected. At the moment, although the housing 102 does not move, the sealing elements 116.5 and 116.6 rotate as the valve body 108 rotated, the sealing elements 116.5 and 116.6 can prevent the valve body opening portions 104.1 and 104.2 from being connected with any of the housing openings 110. However, it should be noted that although the housing opening 110.1 cannot be connected with the valve body opening portions at the moment, it can still be connected with the adjacent housing opening 110.4 through the space between the valve body 108 and the housing 102 to form a fluid passage 118.3, and the housing opening 110.2 can be connected with the adjacent housing opening 110.3 through the space between the valve body 108 and the housing 102 to form a fluid passage 118.4. The sealing elements 116.5 and 116.6 together achieve the sealed connection for the fluid passages 118.3 and 118.4.

Although not shown in detail in the figure, it is understood by those skilled in the art that when the actuator 190 is driven by the driving shaft 135 to rotate to drive the valve body 108 to rotate counterclockwise by about 90°, the valve body is just offset by about 90° as compared to Fig. 1C-(a), and at the moment, the valve body opening portion 104.1 aligns with the housing opening 110.3, the valve body opening portion 104.2 aligns with the housing opening 110.4, the fluid passage 118.2 is connected in a sealed manner, and the fluid passage 118.1 is disconnected in a sealed manner.

Similarly, when the valve body 108 rotates by other angles so that the valve body opening portions 104 do not completely align with the housing openings 110, but rather are offset by a certain angle, the flow rate of the fluid flowing through the fluid passage 118 can also be regulated, i.e., the opening degree of the valve 100 is regulated.

The arrangement of the sealing element 116 according to the third embodiment and the rotational position of the valve body 108 will now be described with reference to Figs. 1A, 1D-(a) and 1D-(b).

As shown in Figs. 1D-(a) and 1D (b), the structure of the housing 102 and the valve body 108 is the same as that shown in the embodiment of Figs. 1B-(a) and 1B-(b), but the shape and position of the sealing elements 116 are different from those shown in the embodiments of Figs. 1B-(a) and 1B-(b). In this embodiment, the sealing elements 116 comprise four sealing elements 116.7, 116.8, 116.9 and 116.10 arranged corresponding to the housing openings 110.1-110.4, and also comprise two sealing elements 116.11 and 116.12 arranged corresponding to the valve body opening portions 104.1 and 104.2. Here, the positions of the sealing elements 116.7-116.10 are the same as those shown in the embodiment of Figs. 1B-(a) and 1B-(b), and each sealing element is provided between the housing 102 and the valve body 108 around one corresponding housing opening. The positions of the sealing elements 116.11 and 116.12 are the same as those shown in the embodiment of Figs. 1C-(a) and 1C-(b), and each sealing element is disposed between the housing 102 and the valve body 108 around one corresponding valve body opening portion. In this embodiment, the sealing elements 116.7-116.10 on the housing 102 match the sealing elements 116.11-12 on the valve body 108 in shape and thickness. As a specific embodiment, the sealing elements 116.7-116.10 have the same shape, and they are connected to the housing 102 on one side and spaced from the valve body 108 on the other side; the sealing elements 116.11-116.12 have the same shape and also have the same shape as that of the sealing elements 116.7-116.10, and they are connected to the valve body 108 on one side and spaced from the housing 102 on the other side. Here, the distance between the sealing elements 116.7-116.10 and the valve body 108 is the same as the thickness of the sealing elements 116.11-116.12. Similarly, the distance between the sealing elements 116.11-116.12 and the housing 102 is the same as the thickness of the sealing elements 116.7-116.10. Thus, when the sealing elements 116.7-116.10 on the housing 102 and the sealing elements 116.11-12 on the valve body 108 cooperate with and press against each other, they can achieve the sealing effect equivalent to the sealing elements in the embodiments shown in Figs. 1B and 1C. When the sealing elements on the housing 102 are in contact with and press against the sealing elements on the valve body 108, the sealing elements are elastically deformed such that frictional resistance is generated between the sealing elements on the housing 102 and the sealing elements on the valve body 108, which frictional resistance shall be overcome to rotate the valve body 108. However, in this embodiment, the frictional resistance between the sealing elements on the housing 102 and the sealing elements on the valve body 108 varies with changes in their contact area, and therefore, when the valve body is in different positions relative to the housing, the frictional resistance to be overcome for rotating the valve body may be different.

As an example, the six sealing elements 116 are all formed by integral molding, for example by secondary injection molding or overmolding. Specifically, the housing 102 and the valve body 108 can be formed by means of an injection molding process, and then by means of a secondary injection molding process, the sealing elements 116.7-116.10 are formed on the housing 102, and the sealing elements 116.11-116.12 are formed on the valve body 108, so that these sealing elements 116 not only have a certain strength but also ensure the elasticity.

When the driving shaft 135 is driven by the actuator 190 to rotate to drive the valve body 108 to rotate by a predetermined angle to reach the position shown in Fig. 1D-(a), the position of the valve body 108 relative to the housing 102 is the same as that shown in Fig. 1B-(a). The valve body opening portions 104.1 and 104.2 respectively align with the housing openings 110.1 and 110.2, so that the fluid passage 118.1 is connected. At the same time, the valve body outer wall portion aligns with the other housing openings 110.3 and 110.4 to disconnect the fluid passage 118.2. At the moment, the sealing element 116.7 around the housing opening 110.1 and the sealing element 116.11 around the valve body opening portion 104.1 align with and press against each other, and the sealing element 116.8 around the housing opening 110.2 and the sealing element 116.12 around the valve body opening 104.2 align with and press against each other so as to have a sealing effect to prevent the housing openings 110.1 and 110.2 from being connected with the valve body opening portions 104 other than the corresponding valve body opening portions or other housing openings 110 through the space between the valve body 108 and the housing 102, such that the fluid passage 118.1 is connected in a sealed manner, and the fluid passage 118.2 is disconnected in a sealed manner. The sealing elements 116.9 and 116.10 are spaced from the valve body 102 by a certain distance, thus not affecting flow of the fluid.

When the driving shaft 135 is driven by the actuator 190 to rotate to drive the valve body 108 to rotate counterclockwise by about 45° to reach the position shown in Fig. 1D-(b), the position of the valve body 108 relative to the housing 102 is also the same as that shown in Fig. 1B-(b). The valve body opening portions 104.1 and 104.2 do not align with any of the housing openings 110, and all the housing openings 110.1-110.4 align with the valve body outer wall portion. However, it should be noted that in this embodiment, since the sealing elements 116 are of circular ring shapes, even if the sealing elements 116.11 and 116.12 on the valve body 108 each partially press against the sealing elements 116.7-116.10 on the housing 102, they cannot have a sealing effect, and thus each of the housing openings 110.1-110.4 can be connected through the space between the valve body 108 and the housing 102. It is understood by those skilled in the art that in other embodiments, by means of configuring the specific shape of the sealing elements 116, the sealing elements on the valve body can have a sealing effect even if they only partially press against the sealing elements on the housing. Of course, in this embodiment, when the sealing elements on the valve body 108 are completely offset from the sealing elements on the housing 102, each of the housing openings 110.1-110.4 can also be connected with each other through the space between the valve body 108 and the housing 102.

Although not shown in detail in the figure, it is understood by those skilled in the art that when the actuator 190 is driven by the driving shaft 135 to rotate to drive the valve body 108 to rotate counterclockwise by about 90°, the valve body 108 is just offset by about 90° as compared to Fig. 1D-(a), and at the moment, the valve body opening portion 104.1 aligns with the housing opening 110.3, the valve body opening portion 104.2 aligns with the housing opening 110.4, the fluid passage 118.2 can be connected in a sealed manner, and the fluid passage 118.1 is disconnected in a sealed manner.

Similarly, when the valve body 108 rotates by other angles so that the valve body opening portions 104 do not completely align with the housing openings 110, but rather are offset by a certain angle, the flow rate of the fluid flowing through the fluid passage 118 can also be regulated, i.e., the opening degree of the valve 100 is regulated.

Thus, the sealing elements 116 can be provided on an inner side of the housing 102 around the housing openings 110 (as the embodiments shown in Figs. 1B-(a) and 1B-(b)), and can also be provided on an outer side of the valve body 108 around the valve body opening portions 104 (as the embodiments shown in Figs. 1C-(a) and 1C-(b)). Also, several sealing elements thereof can be disposed on an outer side of the valve body 108 around the valve body opening portions 104, and several sealing elements thereof can be disposed on an inner side of the housing 102 around corresponding housing openings 110 (as the embodiments shown in Figs. 1D-(a) and 1D-(b)). When the valve body opening portions 104 are connected with the housing openings 110, the sealing elements 116 are used to achieve sealed fluid communication between the corresponding valve body opening portions 104 and the housing openings 110.

In addition, the sealing elements 116 are directly formed onto the valve body 108 or the housing 102 by means of overmolding, thereby simplifying the connection structure, reducing assembly steps, facilitating automation, and reducing costs while ensuring the leakproofness of the sealing elements 116.

Figs. 2A and 2B are simplified schematic diagrams of the sealing element 116. As an example, the sealing element 116 is an annular seal ring that is molded around at least one of the valve body opening portion 104 and the housing opening 110. The sealing element 116 has a hollow opening 222, and the opening 222 can be used to expose the valve body opening portion 104 or the housing opening 110, so that the sealing element 116 can achieve sealed fluid communication between the valve body opening portion 104 and the housing opening 110 that are connected. It is understood by those skilled in the art that when the valve body opening portion 104 or the housing opening 110 is not in a circular shape, the sealing element 116 may also be provided in a corresponding other shape.

Figs. 3A-(a), 3A-(b) and 3A-(c) and Figs. 3B-(a), 3B-(b) and 3B-(c) are simplified schematic diagrams of the valve body 108, the housing 102 and the sealing element 116 according to an unclaimed embodiment of the valve 100 for illustrating the operating principle of a lifting structure of the present disclosure, wherein the sealing elements 116 are molded on the valve body 108 around the valve body acting portions 304.

The valve 100 further comprises at least one lifting structure, which is used for moving the sealing element 116 upward and downward relative to the housing 102 to regulate the relative distance between an upper surface of the sealing element 116 and the housing 102. Here, the lifting structure may comprise a lifting element, or may comprise shapes or structures of mating designs on the valve body and the housing (see Figs. 5A-5B and 6A-6B). For ease of description, the upward and downward movement in the specific embodiments of the present disclosure is with respect to the distance between the sealing element and the valve body/housing. When the distance between the sealing element and the valve body/housing increases, the sealing element is considered to move upward; and when the distance between the sealing element and the valve body/housing decreases, the sealing element is considered to move downward. Here, in this embodiment, the at least one lifting structure is at least one lifting element 350. Figs. 3A-(a), 3A-(b) and 3A-(c) show an embodiment in which the lifting element 350 is connected to the valve body 108, while Figs. 3B-(a), 3B-(b) and 3B-(c) show an embodiment in which the lifting element 350 is connected to the housing 102. The lifting movement in this embodiment is with respect to the axis of rotation about which the valve body 108 rotates. For example, in Figs. 3A-(a), 3A-(b) and 3A-(c), when the sealing element 116 moves towards the axis of rotation of the spherical valve body 108 relative to the housing 102, the sealing element 116 is considered to move downward, otherwise, the sealing element 116 is considered to move upward.

The lifting element 350 may be a plurality of driving components 350, and each driving component 350 can directly or indirectly move one corresponding sealing element 116 upward and downward. Before it is desired to rotate the valve body 108 to connect or disconnect or regulate the fluid passage (not shown in the figures), the lifting element 350 moves the sealing element 116 downward, so that the sealing element 116 moves relative to the housing 102 to move out of its sealing position, and to leave the housing 102 or reduce the pressing force against the housing 102. When the valve body 108 reaches the desired position, i.e., after the fluid passage is connected or disconnected or regulated, the rotation of the valve body 108 is stopped and then the lifting element 350 moves the sealing element 116 upward to move the sealing element 116 relative to the housing 102 again. The sealing element 116 moves into its sealing position to come in contact with the housing 102 or increase the pressing force against the housing 102, so that the valve body acting portion 304 on the valve body 108 is in sealed fluid communication with the housing opening 310 on the housing 102. Thus, it is possible to reduce the frictional resistance between the sealing element and the housing 102 that needs to be overcome when the valve body 108 rotates to connect or disconnect or regulate the fluid passage 118, thereby reducing the driving force required to rotate the valve body 108. In addition, since the sealing element 116 is molded on the valve body 108, by means of moving the sealing element 116 upward and downward by the lifting element 350 to adjust the distance of the sealing element 116 relative to the housing 102, the sealing element 116 can press or not press against the housing 102, thereby extending the service life of the sealing element 116 while reducing the frictional resistance.

Specifically, as shown in Figs. 3A-(a), 3A-(b) and 3A-(c), the valve body 108 comprises a valve body movable portion 380 provided around the valve body action portion 304, and the sealing element 116 is molded on the valve body movable portion 380 and arranged around the valve body action portion 304. Here, the lifting element 350 is connected to the valve body movable portion 380 and is used for moving the valve body movable portion 380 upward and downward to directly move the sealing element 116 upward and downward. Figs. 3A-(a), 3A-(b), and 3A-(c) show schematic diagram s of an operation process in which a target fluid passage needs to be connected or regulated.

Fig. 3A-(a) shows the relative positions of the valve body 108, the housing 102 and the sealing element 116 when the sealing element 116 fluidly connects a preceding fluid passage in a sealed manner. When another target fluid passage needs to be connected, or before the flow rate of the fluid flowing through the target fluid passage is regulated, the lifting element 350 firstly moves the valve body movable portion 380 on the valve body 108 downward so that the upper surface of the sealing element 116 leaves the housing 102 to reach the position shown in Fig. 3A-(b).

Fig. 3A-(b) shows the relative positions of the valve body 108, the housing 102 and the sealing element 116 when the lifting element 350 moves the sealing element 116 downward. At the moment, the valve body movable portion 380 of the valve body 108 is lowered away from the housing 102, the sealing element 116 is moved downward therewith to leave the housing 102, such that the sealing element 116 neither seals the fluid passage nor exerts any frictional resistance to the housing 102. At the moment, the valve body 108 can rotate as needed.

Fig. 3A-(c) shows the relative positions of the valve body 108, the housing 102 and the sealing element 116 when the valve body 108 rotates. Since the sealing element 116 leaves the housing 102, there is no frictional resistance between the sealing element 116 and the housing 102 that needs to be overcome, and only a small driving force is required to drive the valve body 108 to rotate. In the state shown in the figure, the valve body movable portion 380 of the valve body 108 along with other parts can rotate clockwise to reach the target position, so that the valve body action portion 304 can align with the desired housing opening on the housing 102 to connect the target fluid passage. It is understood by those skilled in the art that, depending on the type of the valve body and the housing and the opening, the valve body 108 can also rotate clockwise first and then counterclockwise, or rotate counterclockwise first and then clockwise.

The valve body 108 stops rotation after the valve body 108 rotates to a desired position and connects the target fluid passage. The lifting element 350 moves the corresponding valve body movable portion 380 of the valve body 108 upward, so that the upper surface of the sealing element 116 comes into contact with the housing 102 again and reaches the position shown in Fig. 3A-(a) again. At the moment, the sealing element 116 presses against the housing 102 to fluidly connect the target fluid passage in a sealed manner.

It should be noted that, as an example, only after the valve body 108 rotates to the desired position and connects the target fluid passage, the lifting element 350 moves the valve body movable portion 380 upward so that the sealing element 116 comes into contact with the housing 102 and seals the fluid passage. When the valve body 108 has not yet reached the desired position, even if the valve body 108 stops rotation, the lifting element 350 does not move the valve body movable portion 380 upward.

Of course, it is understood by those skilled in the art that the lifting element 350 can also be connected to the housing 102, and the relative distance between the sealing element 116 and the housing 102 can be regulated by moving the housing 102 upward and downward.

As shown in Figs. 3B-(a), 3B-(b) and 3B-(c), the housing 102 comprises a housing movable portion 320 provided around the housing opening 310, and the sealing element 116 is provided on the valve body 108 around the valve body acting portion 304. The lifting element 350 is connected to the housing movable portion 320 to indirectly move the sealing element 116 upward and downward. That is, the lifting element 350 moves the housing movable portion 320, such that the sealing element 116 is moved upward and downward relative to the housing 102.

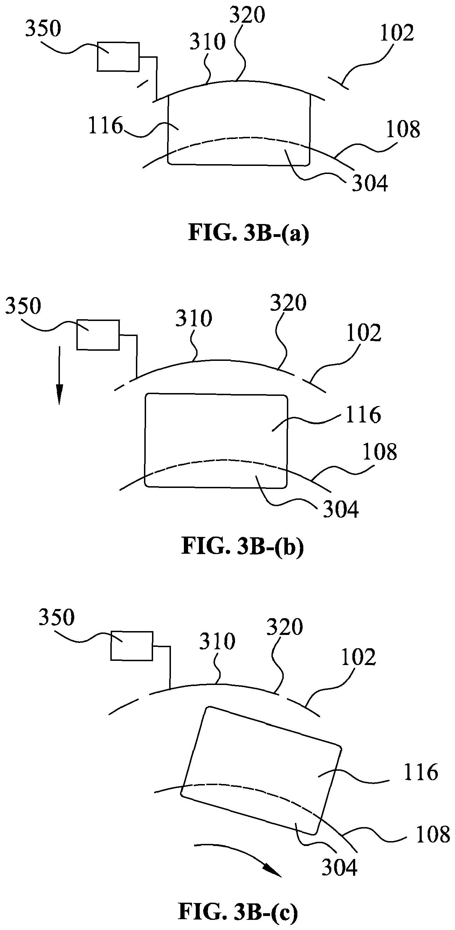

Similar to the operation process shown in Figs. 3A-(a), 3A-(b) and 3A-(c), as shown in Fig. 3B-(a), when the target fluid passage 118 needs to be connected, or before the flow rate of the fluid flowing through the target fluid passage 118 is regulated, the lifting element 350 firstly moves the housing movable portion 320 on the housing 102 upward to a position as shown in Fig. 3B-(b), so that the upper surface of the sealing element 116 leaves the housing 102, and the valve body 108 then rotates clockwise to the position of Fig. 3B-(c). At the moment, the target fluid passage 118 is connected, and the lifting element 350 can move the corresponding housing movable portion 320 on the housing 102 downward to a position as shown in Fig. 3B-(a), so that the sealing element 116 connects the target fluid passage in a sealed manner.

Thus, when it is necessary to rotate the valve body 108 to connect the target fluid passage, or when the flow rate of the fluid flowing through the target fluid passage needs to be regulated, by means of reducing the frictional resistance between the sealing element 116 and the housing 102, the driving force required to rotate the valve body 108 can be reduced. In addition, since the sealing element 116 is molded on the valve body/housing, by moving the lifting element 350 upward and downward to relatively move the sealing element 116 upward and downward, the service life of the sealing element 116 can be extended while the frictional resistance is reduced.

Figs. 4A-(a), 4A-(b) and 4A-(c) and Figs. 4B-(a), 4B-(b) and 4B-(c) are simplified schematic diagrams of the valve body 108, the housing 102 and the sealing element 116 according to another unclaimed embodiment of the valve 100 for illustrating the operating principle of the lifting structure of the present disclosure, wherein the sealing element 116 is molded on the housing 102 around the housing opening 410. Here, Figs. 4A-(a), 4A-(b) and 4A-(c) show an embodiment in which the lifting element 450 is connected to the housing 102, and Figs. 4B-(a), 4B-(b) and 4B-(c) shows an embodiment in which the lifting element 450 is connected to the valve body 108.

As shown in Figs. 4A-(a), 4A-(b) and 4A-(c), the housing 102 comprises a housing movable portion 420 provided around the housing opening 410, and a sealing element 116 is molded on the housing movable portion 420 and arranged around the housing opening 410. Here, the lifting element 450 is connected to the housing movable portion 420 for moving the housing movable portion 420 upward and downward, so as to directly move the sealing element 116 upward and downward. Figs. 4A-(a), 4A-(b), and 4A-(c) show schematic diagrams of an operation process in which a target fluid passage needs to be connected or regulated.

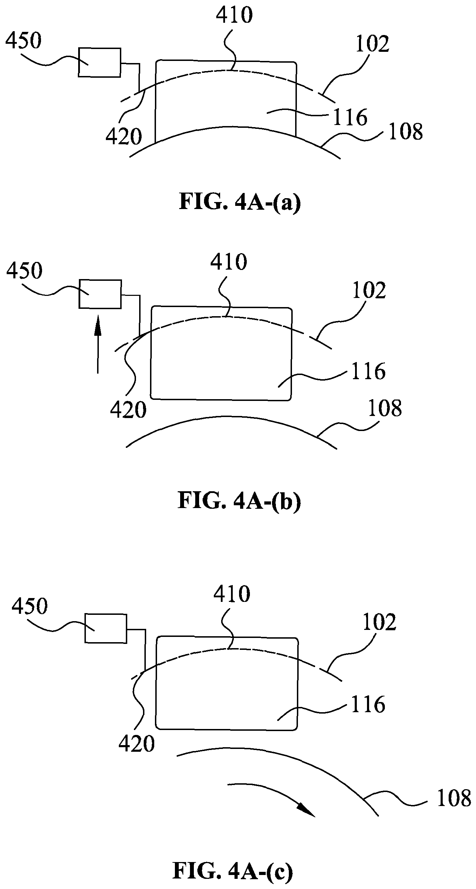

Similar to the operation process shown in Figs. 3A-(a), 3A-(b) and 3A-(c), as shown in Fig. 4A-(a), when it is desired to connect the target fluid passage, or before the flow rate of the fluid flowing through the target fluid passage needs to be regulated, the lifting element 450 firstly moves the housing movable portion 420 on the housing 102 upward, so that a lower surface of the sealing element 116 leaves the valve body 108 and reaches the position shown in Fig. 4A-(b). Then the valve body 108 rotates clockwise to the desired position as shown in Fig. 4A-(c), and then the valve body 108 stops rotation after the target fluid passage is connected. The lifting element 450 moves the corresponding housing movable portion 420 on the housing 102 downward to make the lower surface of the sealing element 116 come into contact with the housing 102 again and reach the position shown in Fig. 4A-(a) again, so that the sealing element 116 fluidly connect the target fluid passage in a sealed manner.

Similarly, as shown in Figs. 4B-(a), 4B-(b) and 4B-(c), the valve body 108 comprises a valve body movable portion 480 provided around the valve body acting portion 404, and the sealing element 116 is molded on the housing 102 and arranged around the housing opening 410. The lifting element 450 is connected to the valve body movable portion 480 and indirectly moves the sealing element 116 upward and downward. That is, the lifting element 450 moves the valve body movable portion 480 upward and downward, so that the sealing element 116 is moved upward and downward relative to the valve body 108.

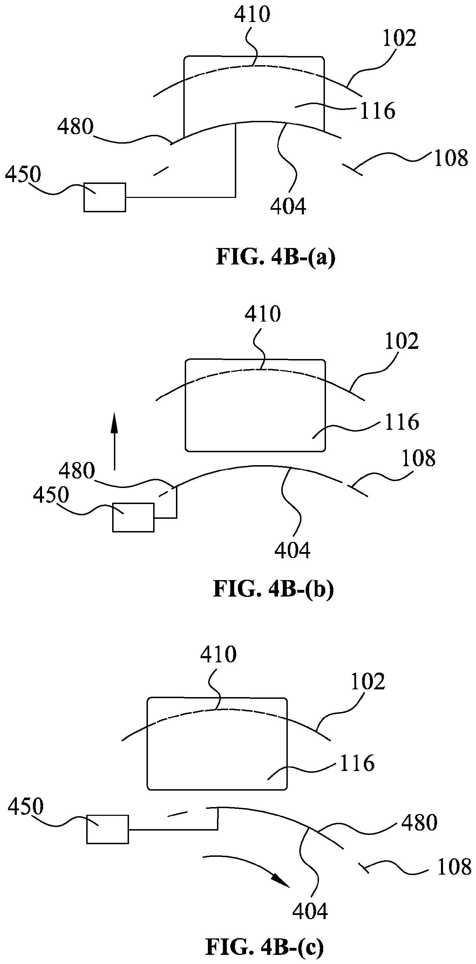

Similar to the operation process shown in Figs. 3B-(a), 3B-(b) and 3B-(c), as shown in Fig. 4B-(a), when it is desired to connect the target fluid passage or before the flow rate of the fluid flowing through the target fluid passage is regulated, the lifting element 450 firstly moves the valve body movable portion 480 on the valve body 108 downward to the position shown in Fig. 4B-(b), so that the lower surface of the sealing element 116 leaves the valve body 108, and the valve body 108 then rotates clockwise to the position of Fig. 4B-(c). At the moment, the target fluid passage is connected, and the lifting element 450 can move the corresponding valve body movable portion 480 on the valve body 108 upward to the position of Fig. 4B-(a), so that the sealing element 116 fluidly connects the target fluid passage in a sealed manner.

Figs. 5A and 5B are simplified principle schematic diagrams of a valve 500 having a lifting structure 550 according to yet another embodiment of the present disclosure. As shown in Figs. 5A and 5B, the valve 500 comprises a housing 502 and a valve body 508, and a sealing element 516 is molded on the valve body 508 around the valve body acting portion 504, wherein the valve body 508 can rotate around a shaft 535.

Here, the valve 500 further comprises a lifting structure 550. The configuration of the lifting structure 550 causes inconsistent distance between the acting portion 504 of the valve body 508 and the corresponding portion of the housing 502 in a direction in which the valve body 508 rotates. Therefore, as the valve body 508 rotates, the sealing element 516 can move upward and downward relative to the corresponding housing 502, i.e., the relative distance between them can be increased or decreased. Here, a portion, aligning and cooperating with the valve body acting portion 504 of the valve body 508, on the housing 502 can be considered as the corresponding portion of the housing 502.

Specifically, when the valve body 508 rotates around the shaft 535 from the position shown in Fig. 5A to the position shown in Fig. 5B, the sealing element 516 can move from the position pressing against the corresponding portion of the housing 502 to the position away from the corresponding portion of the housing 502, thereby reducing the frictional resistance of the sealing element 516 to the corresponding portion of the housing 502 to reduce the driving force required from the actuator.

Similarly, although not shown in the drawings, it is understood by those skilled in the art that when the sealing element is molded on the housing around the housing opening, the rotation of the valve body can also enable the sealing element to move upward and downward relative to the corresponding valve body acting portion on the valve body so as to adjust the relative distance between the sealing element and the valve body.

When it is desired to rotate the valve body 508 to communicate the target fluid passage or to regulate the flow rate of the fluid flowing through the target fluid passage, by means of reducing the frictional resistance between the sealing element 516 and the housing 502 or the valve body 508, the driving force required to rotate the valve body 508 can be reduced accordingly, and the service life of the sealing element 516 can be extended.

In this embodiment, the lifting structure 550 comprises a structure for eccentrically arranging the valve body 508 and the housing 502. It understood by those skilled in the art that in other embodiments, the lifting structure may also comprise other structures, for example, a structure for eccentrically arranging the valve body and the shaft (see the embodiment in Figs. 6A and 6B), as long as it is configured that the distance between the corresponding portion between the valve body and the housing in the direction of rotation is inconsistent, such that when the valve body rotates, the relative distance between the sealing element and the valve body or the housing can be changed.

Figs. 6A and 6B are specific structural views of a valve 600 having a lifting structure 650 according to still another embodiment of the present disclosure, in which the valve body acting portion 604 is different from the valve body acting portion 104 of Fig. 1A, and the valve body acting portion 604 is not an opening portion, but a blocking portion. Also, the lifting structure 650 is different from the lifting structure 550 of Figs. 5A and 5B, the lifting structure 650 comprises a structure for eccentrically arranging a valve body 608 and a shaft 635.

As shown in Figs. 6A and 6B, a housing 602 is provided with four housing openings 610.1, 610.2, 610.3 and 610.4, the housing openings 610.1 and 610.2 are oppositely arranged, and the housing openings 610.3 and 610.4 are oppositely arranged. The valve body 608 is disposed in the housing 602 and can rotate around the shaft 635 inside the housing 602. In this embodiment, the valve body 608 is formed from a cylinder with depressing the two opposite sides thereof inwardly, wherein recesses 648 are formed at the depressions, and protruding valve body blocking portions 604 are provided at both ends of the cylinder. The two valve body blocking portions 604 are arranged symmetrically, and each valve body blocking portion 604 can cooperate with one housing opening to block part of the housing opening. Here, a sealing element 616 is molded on each valve body blocking portion 604.

When the valve body 608 is in the position shown in Fig. 6A, the blocking portions 604 at both ends of the valve body 608 cooperate with the housing opening 610.3 and the housing opening 610.4, and the two sealing elements 616 are in their respective sealing positions and come into contact with and press against an inner wall of the housing such that the blocking portions 604 block the housing openings 610.3 and 610.4 in a sealed manner, thereby disconnecting the fluid passage therebetween. At the moment, the housing opening 610.1 is connected with the housing opening 610.2 through the space between the recesses 648 of the valve body 608 and the housing 602 to form a fluid passage.

When the valve body 608 rotates to the position as shown in Fig. 6B, the blocking portions 604 at both ends of the valve body 608 leave the housing opening 610.3 and the housing opening 610.4, and the two sealing elements 616 are not in contact with the inner wall of the housing and respectively leave the sealing position thereof. All the housing opening 610.1, the housing opening 610.2, the housing opening 610.3 and the housing opening 610.4 of the valve 600 are connected with each other through the space between the recesses 648 of the valve body 608 and the housing 602 to form connected fluid passages.

In this embodiment, since the center of the valve body 608 and the shaft 635 are eccentrically arranged, as the valve body 608 rotates, the relative distance between the blocking portions 604/the sealing elements 616 and the inner wall of the housing can be changed, i.e., the sealing elements 616 move upward and downward with respect to the housing.

When the valve body 608 rotates from the position shown in Fig. 6A to the position shown in Fig. 6B, the relative distance between the blocking portions 604, the sealing elements 616 and the housing 602 increases, and thus the friction resistance between the sealing elements 616 and the housing 602 gradually decreases from the maximum frictional resistance when they are in full contact, thereby reducing the driving force of the actuator to drive the shaft 635 generally compared to the situation where the maximum frictional resistance needs to be continuously overcome. When the valve body 608 rotates from the position shown in Fig. 6B to the position shown in Fig. 6A, the relative distance between the blocking portions 604/the sealing elements 616 and the housing 602 gradually decreases, and thus the frictional resistance between the sealing elements 616 and the housing 602 gradually increases to the maximum frictional resistance when they are in full contact, until the blocking portions 604 block the corresponding housing openings in a sealed manner, thereby also reducing the driving force of the actuator to drive the shaft 635 generally compared to the situation where the maximum frictional resistance needs to be continuously overcome.

In the embodiment shown in Figs. 6A and 6B, the inner wall of the housing is also configured into a certain shape to further enhance the effect of the lifting structure 650. Specifically, an outer wall of the housing 602 is of a substantially cylindrical shape, and the inner wall of the housing is configured to be formed by successively connecting an arc-shaped wall 641, a straight wall 642, an arc-shaped wall 643, a straight wall 644 and a straight wall 645. Specifically, the inner wall of the housing corresponding to the housing opening 610.3 and the housing opening 610.4 are configured as the straight wall 645 and the straight wall 642; the inner wall of the housing corresponding to the housing opening 610.1 is configured as the arc-shaped wall 641; and the inner wall of the housing corresponding to the housing opening 610.2 is configured as the arc-shaped wall 643 and the straight wall 644. The maximum distance between the arc-shaped wall 641 and the arc-shaped wall 643 is greater than the shortest distance between the straight wall 645 and the straight wall 642.

When the valve body 608 is in the position shown in Fig. 6A, the sealing elements on the blocking portions 604 at both ends of the valve body 608 respectively press against the straight wall 645 and the straight wall 642, and when the valve body 608 is in the position shown in Fig. 6B, the sealing elements on the blocking portions 604 at both ends of the valve body 608 respectively align with but are not in contact with the arc-shaped wall 641 and the arc-shaped wall 643. Thus, as the valve body 608 rotates, the distance between the sealing elements 616 and the housing 602 can be further increased or decreased.

Thus, the lifting structure of the present disclosure may comprise a separate lifting member, and may also comprise shapes or structures of mating designs on the valve body and the housing.

When the multi-passage valve selectively connects respective temperature regulation passages, corresponding sealing elements are required to abut against the inner wall of the housing or the outer wall of the valve body and apply pressing force thereto to ensure the leakproofness of each passage. However, the abutting contact between the sealing elements and the inner wall of the housing or the outer wall of the valve body will cause frictional resistance, which shall be overcome to rotate the valve body.

In the present disclosure, since the sealing elements at least partially leave the valve body or the housing when the valve body rotates, even if the number of the sealing elements is increased due to the increase of the number of the temperature regulating passages or the increase of the number of the housing openings, the frictional resistance can be reduced due to the configuration of the lifting structures. Therefore, even if a traditional low-power actuator is used, the valve body can still be driven to rotate. In addition, by means of reducing the frequency of contact between the sealing elements and the valve body or the housing to a certain extent, the service life of the sealing elements can also be extended.

In addition, according to the present disclosure, the sealing elements are directly formed onto the valve body or the housing by means of overmolding, thereby simplifying the connection structure of the sealing elements, reducing assembly steps, facilitating automation, and reducing the cost while ensuring the leakproofness of the sealing elements.

This description uses examples to disclose the present disclosure, in which one or more examples are illustrated in the drawings. Each example is provided to explain the present disclosure but is not intended to limit the present disclosure. In fact, it would have been obvious to those skilled in the art that various modifications and variations can be made to the present disclosure without departing from the scope of the present disclosure. For example, the illustrated or described features as part of one embodiment can be used with another embodiment to provide a further embodiment. Thus, it is intended that the present disclosure cover the modifications and variations made within the scope of the appended claims.

## Claims

1. A multi-passage valve (100) for controlling the flow of coolant through different flow paths for temperature regulation of components inside a vehicle, the valve comprising:
a housing (102, 502, 602), provided with a plurality of housing openings (110, 310, 410, 610), and a cavity (106, 606) provided therein;
at least one valve body (108, 508, 608) disposed in the housing (102, 502, 602), the at least one valve body (108, 508, 608) being rotatable in the housing (102, 502, 602) and provided with at least one valve body acting portion (104, 304, 404, 504, 604), the at least one valve body (108, 508, 608) is disposed in the cavity (106, 606), wherein, when the at least one valve body (108, 508, 608) rotates by a predetermined angle, the at least one valve body acting portion (104, 304, 404, 504, 604) and at least one of the plurality of housing openings (110, 310, 410, 610) cooperate with each other, such that the at least one valve body acting portion (104, 304, 404, 504, 604) selectively and at least partially opens or blocks at least one of the plurality of housing openings (110, 310, 410, 610) so as to selectively connect or regulate at least one fluid passage (118);
at least one sealing element (116, 516, 616) provided between the housing (102, 502, 602) and the at least one valve body (108, 508, 608), wherein the sealing element (116, 516, 616) is molded on the housing (102, 502, 602) around at least one of the plurality of housing openings (110, 310, 410, 610) and/or on the at least one valve body (108, 508, 608) around the at least one valve body acting portion (104, 304, 404, 504, 604); and
at least one lifting structure configured to move the at least one sealing element (116, 516, 616) upward and downward relative to the housing (102, 502, 602) or the at least one valve body (108, 508, 608) to adjust the relative distance between the at least one sealing element (116, 516, 616) and the housing (102, 502, 602)/the at least one valve body (108, 508, 608);
wherein when the at least one valve body (108, 508, 608) rotates, the at least one sealing element (116, 516, 616) at least partially leaves the housing (102, 502, 602) or the at least one valve body (108, 508, 608);
wherein the at least one lifting structure causes inconsistent distance between the at least one valve body (108) and a corresponding portion, operating in cooperation with the at least one valve body (108), of the housing (102) in a direction of rotation of the at least one valve body (108), so that as the at least one valve body (108) rotates relative to the housing (102), the distance between the at least one sealing element (116) and the housing (102)/the at least one valve body (108) can be increased/decreased; and
wherein the at least one lifting structure comprises:
a structure (550) by which the at least one valve body (108) is eccentrically arranged relative to a corresponding portion, operating in cooperation with the at least one valve body (108), of the housing (102), or
a structure (650) by which the center of the at least one valve body (108) is eccentrically disposed relative to the center of rotation of the at least one valve body (108), the valve being **characterized in that**
the at least one valve body acting portion (104, 304, 404, 504, 604) comprises at least one valve body opening portion (104), and when the at least one valve body (108) rotates by a predetermined angle, the at least one valve body opening portion (104) and at least one housing opening (110) of the plurality of housing openings (110) cooperate with each other such that the at least one valve body opening portion (104) selectively and at least partially opens the at least one housing opening (110) of the plurality of housing openings (110) so as to selectively connect or regulate the at least one fluid passage.

2. The valve (100) of claim 1, **characterized in that**
when the at least one valve body (108) rotates by a predetermined angle, the at least one valve body acting portion (104, 304, 404, 504, 604) and at least one housing opening (110, 310, 410, 610) of the plurality of housing openings (110, 310, 410, 610) can align and cooperate with each other.

## Patentansprüche

1. Mehrwegeventil (100) zum Steuern des Kühlmittelflusses durch verschiedene Fließwege zur Temperaturregulierung von Komponenten in einem Fahrzeug, das Ventil aufweisend:
ein Gehäuse (102, 502, 602), das mit einer Vielzahl von Gehäuseöffnungen (110, 310, 410, 610) vorgesehen ist, und einen darin vorgesehenen Hohlraum (106, 606);
zumindest einen Ventilkörper (108, 508, 608), der in dem Gehäuse (102, 502, 602) angeordnet ist, wobei der zumindest eine Ventilkörper (108, 508, 608) in dem Gehäuse (102, 502, 602) drehbar und mit zumindest einem Ventilkörperwirkabschnitt (104, 304, 404, 504, 604) vorgesehen ist, wobei der zumindest eine Ventilkörper (108, 508, 608) in dem Hohlraum (106, 606) angeordnet ist, wobei wenn der zumindest eine Ventilkörper (108, 508, 608) sich um einen vorbestimmten Winkel dreht, der zumindest eine Ventilkörperwirkabschnitt (104, 304, 404, 504, 604) und zumindest eine der Vielzahl von Gehäuseöffnungen (110, 310, 410, 610) miteinander zusammenwirken, sodass der zumindest eine Ventilkörperwirkabschnitt (104, 304, 404, 504, 604) selektiv und zumindest teilweise zumindest eine der Vielzahl von Gehäuseöffnungen (110, 310, 410, 610) öffnet oder absperrt, um selektiv zumindest einen Fluiddurchfluss (118) zu verbinden oder zu regeln;
zumindest ein Dichtelement (116, 516, 616), das zwischen dem Gehäuse (102, 502, 602) und dem zumindest einen Ventilkörper (108, 508, 608) vorgesehen ist, wobei das Dichtelement (116, 516, 616) an dem Gehäuse (102, 502, 602) um zumindest eine der Vielzahl der Gehäuseöffnungen (110, 310, 410, 610) herum und/oder an dem zumindest einen Ventilkörper (108, 508, 608) um den zumindest einen Ventilkörperwirkabschnitt (104, 304, 404, 504, 604) herum geformt ist; und
zumindest eine Hebestruktur, die so ausgebildet ist, dass sie das zumindest eine Dichtelement (116, 516, 616) relativ zu dem Gehäuse (102, 502, 602) oder dem zumindest einen Ventilkörper (108, 508, 608) nach oben und unten bewegt, um den relativen Abstand zwischen dem zumindest einen Dichtelement (116, 516, 616) und dem Gehäuse (102, 502, 602)/dem zumindest einen Ventilkörper (108, 508, 608) einzustellen;
wobei das zumindest eine Dichtelement (116, 516, 616) das Gehäuse (102, 502, 602) oder den zumindest einen Ventilkörper (108, 508, 608) zumindest teilweise verlässt, wenn sich der zumindest eine Ventilkörper (108, 508, 608) dreht;
wobei die zumindest eine Hebestruktur einen uneinheitlichen Abstand zwischen dem zumindest einen Ventilkörper (108) und einem entsprechenden Abschnitt des Gehäuses (102), der mit dem zumindest einen Ventilkörper (108) in einer Drehrichtung des zumindest einen Ventilkörpers (108) zusammenwirkt, hervorruft, sodass, wenn sich der zumindest eine Ventilkörper (108) relativ zu dem Gehäuse (102) dreht, der Abstand zwischen dem zumindest einen Dichtelement (116) und dem Gehäuse (102)/dem zumindest einen Ventilkörper (108) vergrößert/verkleinert werden kann; und
wobei die zumindest eine Hebestruktur aufweist:
eine Struktur (550), durch die der zumindest eine Ventilkörper (108) relativ zu einem entsprechenden Abschnitt des Gehäuses (102), der mit dem zumindest einen Ventilkörper (108) zusammenwirkt, exzentrisch angeordnet ist oder
eine Struktur (650), durch die das Zentrum des zumindest einen Ventilkörpers (108) relativ zu dem Drehzentrum des zumindest einen Ventilkörpers (108) exzentrisch angeordnet ist, wobei das Ventil
**dadurch gekennzeichnet ist, dass**
der zumindest eine Ventilkörperwirkabschnitt (104, 304, 404, 504, 604) zumindest einen Ventilkörperöffnungsabschnitt (104) aufweist, und wenn sich der zumindest eine Ventilkörper (108) um einen vorbestimmten Winkel dreht, der zumindest eine Ventilkörperöffnungsabschnitt (104) und zumindest eine Gehäuseöffnung (110) der Vielzahl von Gehäuseöffnungen (110) derart zusammenwirken, dass der zumindest eine Ventilkörperöffnungsabschnitt (104) selektiv und zumindest teilweise die zumindest eine Gehäuseöffnung (110) der Vielzahl von Gehäuseöffnungen (110) öffnet, um den zumindest einen Fluiddurchfluss selektiv zu verbinden oder zu regeln.

2. Ventil (100) nach Anspruch 1, **dadurch gekennzeichnet, dass** wenn sich der zumindest eine Ventilkörper (108) um einen vorbestimmten Winkel dreht, der zumindest eine Ventilkörperwirkabschnitt (104, 304, 404, 504, 604) und zumindest eine Gehäuseöffnung (110, 310, 410, 610) der Vielzahl von Gehäuseöffnungen (110, 310, 410, 610) ausgerichtet sind und zusammenwirken können.

## Revendications

1. Valve à voies multiples (100) pour la commande de l'écoulement de fluide de refroidissement à travers différents trajets d'écoulement pour la régulation de température de composants à l'intérieur d'un véhicule, la valve comprenant :
un logement (102, 502, 602), muni d'une pluralité d'ouvertures de logement (110, 310, 410, 610), et une cavité (106, 606) prévue dans celui-ci ;
au moins un corps de valve (108, 508, 608) disposé dans le logement (102, 502, 602), l'au moins un corps de valve (108, 508, 608) pouvant tourner dans le logement (102, 502, 602) et muni d'au moins une partie d'actionnement de corps de valve (104, 304, 404, 504, 604), l'au moins un corps de valve (108, 508, 608) est disposé dans la cavité (106, 606), dans lequel, lorsque l'au moins un corps de valve (108, 508, 608) tourne selon un angle prédéterminé, l'au moins une partie d'actionnement de corps de valve (104, 304, 404, 504, 604) et au moins une parmi la pluralité d'ouvertures de logement (110, 310, 410, 610) coopèrent entre elles, de sorte que l'au moins une partie d'actionnement de corps de valve (104, 304, 404, 504, 604) ouvre ou bloque sélectivement et au moins partiellement au moins une parmi les ouvertures de logement (110, 310, 410, 610) afin de connecter ou réguler sélectivement au moins un passage de fluide (118) ;
au moins un élément d'étanchéité (116, 516, 616) prévu entre le logement (102, 502, 602) et l'au moins un corps de valve (108, 508, 608), dans lequel l'élément d'étanchéité (116, 516, 616) est moulé sur le logement (102, 502, 602) autour d'au moins une parmi la pluralité d'ouvertures de logement (110, 310, 410, 610) et/ou sur l'au moins un corps de valve (108, 508, 608), autour de l'au moins une partie d'actionnement de corps de valve (104, 304, 404, 504, 604) ; et
au moins une structure de levage configurée pour déplacer l'au moins un élément d'étanchéité (116, 516, 616) vers le haut et vers le bas par rapport au logement (102, 502, 602) ou l'au moins un corps de valve (108, 508, 608) pour ajuster la distance relative entre l'au moins un élément d'étanchéité (116, 516, 616) et le logement (102, 502, 602)/l'au moins un corps de valve (108, 508, 608) ;
dans lequel lorsque l'au moins un corps de valve (108, 508, 608) tourne, l'au moins un élément d'étanchéité (116, 516, 616) quitte au moins partiellement le logement (102, 502, 602) ou l'au moins un corps de valve (108, 508, 608) ;
dans lequel l'au moins une structure de levage provoque une distance incompatible entre l'au moins un corps de valve (108) et une partie correspondante, fonctionnant en coopération avec l'au moins un corps de valve (108), du logement (102) dans un sens de rotation de l'au moins un corps de valve (108), de sorte que lorsque l'au moins un corps de valve (108) tourne par rapport au logement (102), la distance entre l'au moins un élément d'étanchéité (116) et le logement (102)/l'au moins un corps de valve (108) peut être augmentée/diminuée ; et
dans lequel l'au moins une structure de levage comprend :
une structure (550) par laquelle l'au moins un corps de valve (108) est agencé de manière excentrique par rapport à une partie correspondante, fonctionnant en coopération avec l'au moins un corps de valve (108), du logement (102), ou une structure (650) par laquelle le centre de l'au moins un corps de valve (108) est disposé de manière excentrique par rapport au centre de rotation de l'au moins un corps de valve (108), la valve étant
**caractérisée en ce que**
l'au moins une partie d'actionnement de corps de valve (104, 304, 404, 504, 604) comprend au moins une partie d'ouverture de corps de valve (104), et lorsque l'au moins un corps de valve (108) tourne selon un angle prédéterminé, l'au moins une partie d'ouverture de corps de valve (104) et au moins une ouverture de logement (110) parmi la pluralité d'ouvertures de logement (110) coopèrent l'une avec l'autre de sorte que l'au moins une partie d'ouverture de corps de valve (104) ouvre sélectivement et au moins partiellement l'au moins une ouverture de logement (110) parmi la pluralité d'ouvertures de logement (110) afin de connecter ou réguler sélectivement l'au moins un passage de fluide.

2. Valve (100) selon la revendication 1, **caractérisée en ce que** lorsque l'au moins un corps de valve (108) tourne selon un angle prédéterminé, l'au moins une partie d'actionnement de corps de valve (104, 304, 404, 504, 604) et au moins une ouverture de logement (110, 310, 410, 610) parmi la pluralité d'ouvertures de logement (110, 310, 410, 610) peuvent s'aligner et coopérer l'une avec l'autre.
